# EUROPEAN PATENT APPLICATION

(11) **EP 3 002 556 A2**
(43) Date of publication of application: **06.04.2016**
(21) Application number: 15181036.3
(22) Date of filing: 14.08.2015
(51) Int. Cl.: G01C 21/20

(54) **VEHICLE INFORMATION-PROCESSING DEVICE**

(30) Priority: 30.09.2014 JP 2014201118
(71) Applicant: Toyota Jidosha Kabushiki Kaisha, Toyota-shi, Aichi 471-8571 (JP)
(72) Inventor: OGURI, Haruki, Toyota-shi,, Aichi 471-8571 (JP)
(74) Representative: TBK

(57) **Abstract**

The determining section (33) defines as, calculation positional information, positional information calculated based on a speed of a vehicle (10, 10A) obtained by a speed obtaining section (32) and a period of time corresponding to an obtainment interval of positional information. The determining section (33) determines whether the positional information of the vehicle (10, 10A) obtained from a positional information obtaining section (31) is abnormal based on a comparison between the calculation positional information and the positional information.

## Description

### BACKGROUND OF THE DISCLOSURE

The present disclosure relates to a vehicle information-processing device that provides a vehicle with information on driving assistance.

A vehicle information-processing device is heretofore known that obtains positional information, such as information on the traveling position of a vehicle, from a navigation device and provides information on driving assistance to this vehicle on the basis of the obtained positional information. In this vehicle information-processing device, information on driving assistance may not be properly provided when the reliability of positional information obtained from the navigation device cannot be maintained. Therefore, for example, Japanese Laid-Open Patent Publication No. 2007-253861 discloses an example of a technique that is capable of properly performing driving assistance and the like even if information obtained from a navigation device is abnormal.

A vehicle control device disclosed by Japanese Laid-Open Patent Publication No. 2007-253861 controls a vehicle while receiving a supply of information from a navigation device. This vehicle control device includes a constant-vehicle-speed setting means, which sets a target vehicle speed for constant-speed traveling, and a vehicle-speed regulating means, which commands the constant-vehicle-speed setting means to change the target vehicle speed when receiving input from the driver. This vehicle control device additionally includes a navigation cooperation vehicle-speed setting means, which sets a target vehicle speed at a predetermined target point in accordance with road conditions in front of the vehicle that are supplied from the navigation device, and an arbitration means, which employs either one of the target vehicle speed for constant-speed traveling and the target vehicle speed at the predetermined target point as a true target vehicle speed. When information supplied from the navigation device to the navigation cooperation vehicle-speed setting means is abnormal, the arbitration means stops employing the target vehicle speed for constant-speed traveling and the target vehicle speed at the predetermined target point. When the information is continuously abnormal, the arbitration means employs only the target vehicle speed for constant-speed traveling in response to input to the vehicle-speed regulating means.

Based on the fact that there is no abnormality notice from the navigation device or there is no response from the navigation device, the vehicle control device disclosed by Japanese Laid-Open Patent Publication No. 2007-253861 determines that information supplied from the navigation device is abnormal. However, the navigation device may provide positional information having low reliability to the aforementioned vehicle information-processing device because of, for example, a delay in processing that is caused by temporary overload or the like. In this case, the vehicle information-processing device might give a command to perform driving assistance based on this positional information having low reliability. A means for obtaining the positional information of a vehicle is not limited to the aforementioned navigation device.

An objective of the present disclosure is to provide a vehicle information-processing device capable of efficiently determining whether obtained vehicle positional information is abnormal.

### SUMMARY

In accordance with one aspect of the present disclosure, a vehicle information-processing device configured to provide driving assistance information to a vehicle is provided. The vehicle information-processing device includes a positional information obtaining section configured to obtain positional information of the vehicle, a speed obtaining section configured to obtain a speed of the vehicle, and a determining section configured to determine whether positional information obtained from the positional information obtaining section is abnormal. The determining section is configured to define, as calculation positional information, positional information calculated based on the speed obtained by the speed obtaining section and a period of time corresponding to an obtainment interval of positional information by the positional information obtaining section. Also, the determining section is configured to determine whether the positional information obtained from the positional information obtaining section is abnormal based on a comparison between the calculation positional information and the positional information obtained from the positional information obtaining section.

According to this configuration, whether obtained positional information is abnormal is determined based on a comparison between the obtained positional information and the positional information that is calculated as a destination of the vehicle based on the vehicle speed and a period of time corresponding to the obtainment interval of positional information. Therefore, it is possible for the vehicle information-processing device to efficiently determine whether the obtained positional information is abnormal. For example, it is possible to determine whether the obtained positional information is abnormal based on the difference between the calculated positional information and the obtained positional information. When it is determined that the positional information is abnormal, driving assistance that uses this positional information is stopped, and, as a result, driving assistance that is needless or improper is restrained from being performed.

The positional information may include information, such as latitude/longitude or the distance from a target position or speed and time that make positional identification possible.

It is possible to use the driving assistance information for notification to the driver or for operation control of an automatic braking device or the like.

The determining section is preferably configured to determine that the positional information obtained from the positional information obtaining section has no abnormality if a difference between a position identified by the calculation positional information and a position identified by the positional information obtained from the positional information obtaining section is less than a preset determination value, and determine that the positional information obtained from the positional information obtaining section has an abnormality if the difference is greater than or equal to the preset determination value.

According to this configuration, whether obtained positional information is abnormal is determined by a comparison between the determination value and the difference between the calculated positional information and the obtained positional information. It is possible to more properly determine whether the obtained positional information is abnormal by setting a proper determination value.

The vehicle information-processing device is preferably configured to restrain provision of driving assistance information based on the positional information obtained from the positional information obtaining section for a predetermined period of time after the determining section determines that the positional information obtained from the positional information obtaining section has an abnormality.

According to this configuration, even if a determination about whether obtained positional information is abnormal is changed in a short time, the provision of driving assistance information is restrained from being repeatedly restarted or stopped needlessly in response to the change.

The predetermined period of time may include a period of time until the vehicle covers a predetermined distance, a period of time until predetermined time elapses, a period of time until a target position is changed, or a period of time until a traveling area or a link changes.

The positional information obtaining section is preferably configured to obtain the positional information as a relative distance with respect to a target position that exists in a course of the vehicle. In this case, a relative distance from a front end of the obtainment interval to the target position is defined as a first relative distance, and a relative distance from a rear end of the obtainment interval to the target position is defined as a second relative distance. Also, a residual distance obtained by subtracting a distance calculated based on the speed and a period of time corresponding to the obtainment interval from the first relative distance is defined as a remaining distance. The determining section is preferably configured to compare the remaining distance with the second relative distance.

According to this configuration, whether the obtained positional information is abnormal is determined based on the relative distance to the target position. The target position includes a stopping position and a deceleration position, at which the speed is reduced to a predetermined value including a stopping state. For example, it is possible to suitably perform vehicle stopping assistance by, for example, assistance that guides the release of the accelerator if the target position is a stopping position.

The positional information obtaining section is preferably configured to obtain positional information of the vehicle at constant periods.

While pieces of positional information obtained at constant periods are used easily for driving assistance, abnormalities may occur because of, for example, a delay in processing of a device that provides positional information. According to this configuration, it is possible to determine whether the latest positional information is abnormal each time it is obtained at constant periods, and, in response to this determination, it is possible to provide driving assistance or to restrain this provision.

In accordance with another aspect of the present disclosure, a vehicle information-processing device configured to provide driving assistance information to a vehicle is provided. The vehicle information-processing device includes a positional information obtaining section configured to obtain positional information of the vehicle and a speed obtaining section configured to obtain a speed of the vehicle. The vehicle information-processing device is configured to define, as calculation positional information, positional information calculated based on the speed obtained by the speed obtaining section and a period of time corresponding to an obtainment interval of positional information by the positional information obtaining section. Also, the vehicle information-processing device is configured to restrain provision of driving assistance information based on the positional information obtained from the positional information obtaining section if a difference between a position identified by the calculation positional information and a position identified by the positional information obtained from the positional information obtaining section is greater than or equal to a preset determination value.

According to this configuration, the provision of driving assistance information is restrained if the difference between the obtained positional information and the positional information that is calculated as the destination of the vehicle based on the period of time corresponding to the obtainment interval of positional information and the vehicle speed is greater than or equal to the preset determination value. Therefore, it is possible to restrain the provision of driving assistance information when obtained positional information is abnormal.

The vehicle information-processing device is preferably configured to continuously restrain provision of the driving assistance information based on the positional information obtained from the positional information obtaining section only for a predetermined time after starting to restrain the provision of the driving assistance information.

According to this configuration, even if the difference between the calculated positional information and the obtained positional information changes in a short time, the provision of driving assistance information is restrained from being repeatedly restarted or stopped needlessly in response to the change.

The positional information obtaining section is preferably configured to obtain the positional information as a relative distance with respect to a target position that exists in a course of the vehicle. The positional information obtaining section is preferably configured to define a relative distance from a front end of the obtainment interval to the target position as a first relative distance, define a relative distance from a rear end of the obtainment interval to the target position as a second relative distance, define, as a remaining distance, a residual distance obtained by subtracting a distance calculated based on the speed and a period of time corresponding to the obtainment interval from the first relative distance, and restrain provision of driving assistance information based on the positional information obtained from the positional information obtaining section if a difference between the remaining distance and the second relative distance is greater than or equal to a preset determination value.

According to this configuration, whether the provision of driving assistance information should be restrained is determined based on the relative distance to the target position. The target position includes a stopping position and a deceleration position at which the speed is reduced to a predetermined value including a stopping state.

The positional information obtaining section is preferably configured to obtain the positional information of the vehicle at constant periods.

According to this configuration, it is possible to determine whether the latest positional information is abnormal each time it is obtained at constant periods. In response to this determination, it is possible to provide driving assistance or to restrain this provision.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is a block diagram showing a schematic configuration of a vehicle information-processing device according to a first embodiment of the present disclosure;
Fig. 2 is a flowchart showing a procedure according to which the vehicle information-processing device of Fig. 1 determines whether positional information is abnormal;
Fig. 3A is a plan view showing a relationship between a vehicle and a target point;
Fig. 3B is a graph showing an example of a relationship between an actual remaining distance between the vehicle and the target point shown in Fig. 3A and a remaining distance obtained by the vehicle information-processing device of Fig. 1;
Fig. 4 is a sequence diagram showing a procedure according to which the vehicle information-processing device of Fig. 1 determines whether positional information is abnormal;
Fig. 5 is a block diagram showing a schematic configuration of a vehicle information-processing device according to a second embodiment;
Fig. 6 is a flowchart showing a procedure according to which the vehicle information-processing device of Fig. 5 determines whether to perform driving assistance;
Fig. 7 is a sequence diagram showing a procedure according to which the vehicle information-processing device of Fig. 5 determines whether to perform driving assistance; and
Fig. 8 is a block diagram showing a schematic configuration of a vehicle information-processing device of a modification.

### DESCRIPTION OF THE PREFERRED EMBODIMENTS

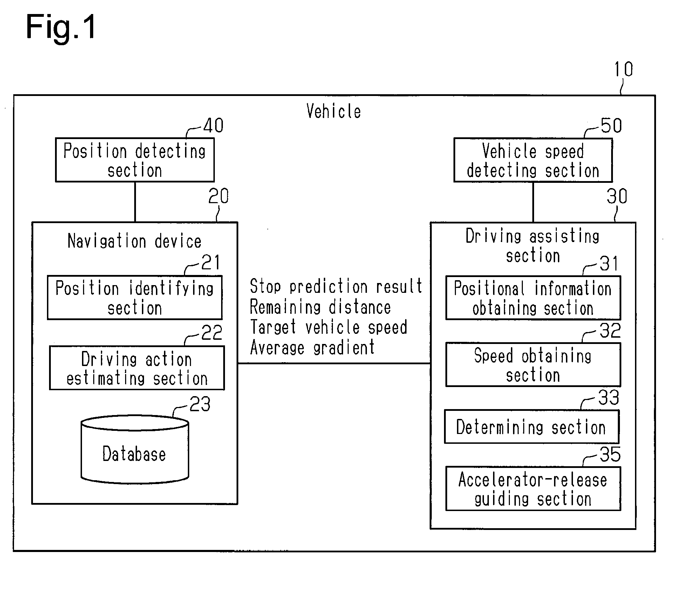

A vehicle information-processing device according to a first embodiment will now be described with reference to Figs. 1 to 4. The vehicle information-processing device according to this embodiment is mounted in a vehicle 10, such as an automobile, and outputs driving assistance information. Particularly, in the present embodiment, the driving assistance information is output in the form of at least either images or voice through a human machine interface (HMI), which is not shown. Driving assistance based on the driving assistance information is thus provided to the vehicle 10.

As shown in Fig. 1, the vehicle 10 includes a position detecting section 40, which detects the position of the vehicle 10, a vehicle speed detecting section 50, which detects the speed of the vehicle, a navigation device 20, which guides the vehicle 10 along its travel route, and a driving assisting section 30, which outputs driving assistance information. The navigation device 20 and the driving assisting section 30 are connected to an in-vehicle LAN, such as a controller area network (CAN), and are configured such that pieces of information are mutually communicated through this in-vehicle LAN. Each of the navigation device 20, the driving assisting section 30 and the position detecting section 40 may include circuitry, respectively. The vehicle speed detecting section 50 may include sensors.

The position detecting section 40 receives GPS satellite signals and detects the present position of the vehicle 10 based on the received GPS satellite signals. The position detecting section 40 is connected to the navigation device 20 through the in-vehicle LAN or is connected directly to the navigation device 20 and outputs positional information on latitude/longitude showing the present position of the detected vehicle 10 to the navigation device 20. The position detecting section 40 may be configured to detect the present position of the vehicle 10 by use of other satellite signals or by use of a road to vehicle communication device in addition to GPS satellite signals.

The vehicle speed detecting section 50 detects the rotation speed of the wheels of the vehicle 10 and outputs a signal according to the detected rotation speed to the driving assisting section 30. The vehicle speed detecting section 50 is connected to the driving assisting section 30 through the in-vehicle LAN, or is connected directly to the driving assisting section 30.

The navigation device 20 guides the vehicle 10 along its route based on the present position of the vehicle 10, which has been obtained from the position detecting section 40, and a destination that has been set, and road map data that has been stored. When the destination is set, the navigation device 20 searches for a travel route of the vehicle 10 from the present position to the destination and allows this searched travel route to be displayed on a display screen in such a manner as to be superimposed on a map display. Therefore, a route guide is provided to the driver in the form of an image. The destination may be set by the driver, or may be automatically set by the navigation device 20 based on, for example, a learning result.

In the navigation device 20, driving assistance objects, which are the targets of driving assistance, are correlated with the road map data. The navigation device 20 determines whether the vehicle 10 has entered an assistance area, which is a range in which assistance is performed for the driving assistance object. The driving assistance objects include, as target positions, stopping positions and deceleration positions, such as traffic lights, stop signs, and sharp curves. In other words, the driving assistance objects are positions at which the speed of the vehicle 10 is reduced to a predetermined value that includes a value corresponding to stoppage. For purposes of illustration, in the following description, the driving assistance object is supposed to be a stopping position of an intersection that has a traffic light.

Furthermore, the navigation device 20 determines that the vehicle 10 has entered an assistance area corresponding to a stopping position and outputs the determination result of having entered this assistance area as a stop prediction result. The navigation device 20 outputs positional information that identifies the position of the vehicle 10. The navigation device 20 outputs positional information, i.e., outputs the distance between the present position of the vehicle 10 and the stopping position as a remaining distance. The navigation device 20 calculates the remaining distance at constant periods, and outputs the calculated remaining distance at constant periods.

The navigation device 20 includes a position identifying section 21, which identifies the present position of the vehicle 10 based on positional information obtained from the position detecting section 40, a driving action estimating section 22, which estimates a driving action on a road along which the vehicle 10 is now traveling, and a database 23, which holds data, such as road map data and driving history data. Map information, road information, and information relative to those pieces of information are held in the road map data. Information on, for example, geographical features is included in the map information. The links and nodes of roads are included in the road information. Pieces of information, such as road shapes, gradients, speed limits, intersections, crosswalks, traffic lights, intersections without traffic lights, stop signs, railroad crossings, tunnels, curves including sharp turns, and road surface states, are correlated with links or nodes of roads. Information on stopping positions is also included in, for example, intersections, stop signs, railroad crossings, and intersections without traffic lights. The driving history data holds data concerning past driving operations, such as speeds, accelerations, and decelerations of the vehicle 10, in correlation with links of roads.

Based on road information, the driving action estimating section 22 detects a stopping position in the traveling direction of the vehicle 10, and identifies the fact that the vehicle 10 has entered an assistance area corresponding to the stopping position when the vehicle 10 approaches the stopping position with a predetermined distance between the vehicle 10 and the stopping position. From an identified stopping position, the driving action estimating section 22 is capable of estimating the tendency of the driving operation of the vehicle 10, such as a deceleration tendency, with respect to the identified stopping position. Additionally, by referring to driving history data concerning the road leading to the stopping position, the driving action estimating section 22 may estimate the driving tendency of the vehicle 10 on this road. The driving history data may be held for each individual driver so that driving actions can be estimated for each individual driver.

The driving assisting section 30 provides driving assistance with regard to deceleration and stopping. The driving assisting section 30 obtains a vehicle speed from the vehicle speed detecting section 50, and obtains information, such as a remaining distance, from the navigation device 20. The driving assisting section 30 outputs information on the time of accelerator-release for deceleration and for stopping. The driving assisting section 30 estimates a deceleration starting point for accelerator-release guidance based on an obtained vehicle speed, and starts accelerator-release guidance when the obtained remaining distance reaches a value corresponding to the deceleration starting point. Preferably, accelerator-release guidance is output so that the deceleration of the vehicle 10 is started at the deceleration starting point. The driving assisting section 30 is capable of performing driving assistance that enables a reduction in fuel consumption by allowing the deceleration starting point to be set at a position at which the amount of use of a mechanically-operated brake is restrained.

In detail, the driving assisting section 30 includes a positional information obtaining section 31, which obtains positional information, a speed obtaining section 32, which obtains a vehicle speed, a determining section 33, which determines whether obtained positional information is abnormal, and an accelerator-release guiding section 35, which guides accelerator-release.

The positional information obtaining section 31 obtains a remaining distance, which is the distance from the navigation device 20 to a stopping position at constant periods, and holds the obtained remaining distance for a period of time required for driving assistance. A storage device (not shown) in the driving assisting section 30 is used to hold the obtained remaining distance. A period of time until the stopping position, which is an assistance object, is changed is set as the period of time required for driving assistance.

The speed obtaining section 32 obtains a vehicle speed from the vehicle speed detecting section 50 at constant periods and holds the obtained vehicle speed for a period of time required for driving assistance. A storage device (not shown) in the driving assisting section 30 is used to hold the obtained vehicle speed. The period of time required for driving assistance is set in the same way as in the positional information obtaining section 31.

The determining section 33 performs a remaining-distance abnormality determination process to determine whether the remaining distance obtained from the navigation device 20 is abnormal. The determining section 33 obtains the latest remaining distance (a second relative distance) and the remaining distance (a first relative distance) that has been obtained one period earlier than the latest remaining distance among the remaining distances obtained by the positional information obtaining section 31. From the speed obtaining section 32, the determining section 33 obtains a speed in an obtainment interval between the latest remaining distance and the remaining distance obtained one period earlier than the latest remaining distance. Each remaining distance and the speed are obtained directly from a storage device (not shown) in the driving assisting section 30 or are obtained through the positional information obtaining section 31 and through the speed obtaining section 32. Furthermore, the determining section 33 calculates an obtainment interval (time interval) between the latest remaining distance and the remaining distance obtained one period earlier than the latest remaining distance. In other words, the obtainment interval can also be calculated from the time difference between the time (rear end) when the latest remaining distance is obtained and the time (front end) when the remaining distance is obtained one period earlier than the latest remaining distance although the obtainment interval is obtained as an interval of one period among constant periods (time intervals). The determining section 33 calculates a remaining distance estimated to correspond to the latest remaining distance based on the speed and the obtainment interval between the remaining distances while depending on the remaining distance obtained one period earlier. Based on this estimated remaining distance and the remaining distance obtained as the latest remaining distance, it is determined whether the value of this remaining distance obtained as the latest remaining distance is abnormal. The determining section 33 is capable of reading various parameters necessary for an assistance execution determination process from the storage device in the driving assisting section 30.

The accelerator-release guiding section 35 inputs the distance to the stopping position and the present speed, and outputs the guide of accelerator-release at a predetermined time. The accelerator-release guiding section 35 calculates the deceleration based on the distance to the stopping position and the present speed. The accelerator-release guiding section 35 outputs the guide of accelerator-release at a time at which the deceleration to be calculated becomes a deceleration that requires only a small amount of use of a mechanically-operated brake. This guide is provided to the driver as a piece of driving assistance information, and, as a result, energy loss resulting from the use of the mechanically-operated brake in the driving operation of the driver is restrained, and fuel efficiency and the like are improved. The accelerator-release guiding section 35 starts or ends the driving assistance in accordance with a processing result of the remaining-distance abnormality determination process of the determining section 33. The accelerator-release guiding section 35 starts driving assistance in accordance with the determination of the determining section 33 that the remaining distance obtained from the navigation device 20 is not abnormal. On the other hand, the accelerator-release guiding section 35 ends driving assistance in accordance with the determination that the remaining distance is abnormal, which is made by the determining section 33 during driving assistance.

More preferably, the accelerator-release guiding section 35 calculates an accelerator-release time in consideration of a target vehicle speed in the route from the present position of the vehicle 10 to the stopping position and the average gradient of the road leading to the stopping position. It also becomes possible for the accelerator-release guiding section 35 to calculate a time at which accelerator-release should be guided with even higher accuracy by considering the target vehicle speed of the vehicle and the average gradient of the road.

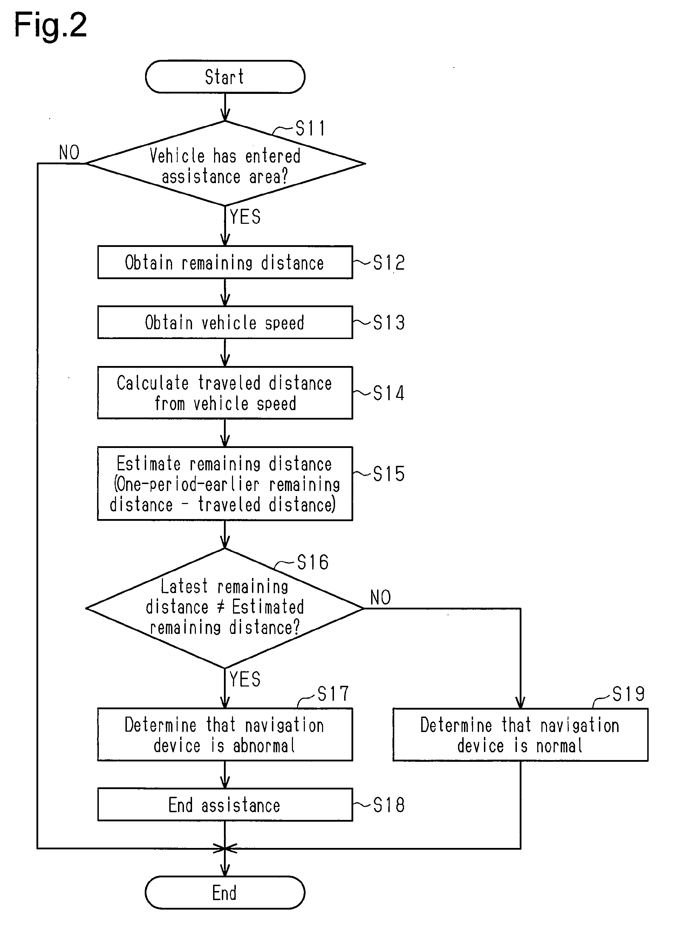

The remaining-distance abnormality determination process executed by the determining section 33 will be described in detail with reference to Fig. 2. The determining section 33 starts the remaining-distance abnormality determination process in response to the obtainment of a stop prediction result from the navigation device 20.

When the remaining-distance abnormality determination process is started, the determining section 33 determines whether the vehicle 10 has entered an assistance area corresponding to the stopping position (step S11 of Fig. 2). When the notice of having entered the assistance area corresponding to the stopping position is imparted from the navigation device 20 as a stop prediction result, it is determined that the vehicle 10 has entered the assistance area, and, when not, it is determined that the vehicle 10 has not entered the assistance area. If it is determined that the vehicle 10 has not entered the assistance area corresponding to the stopping position (NO at step S11 of Fig. 2), the determining section 33 ends the remaining-distance abnormality determination process.

If it is determined that the vehicle 10 has entered the assistance area corresponding to the stopping position (YES at step S11 of Fig. 2), the determining section 33 obtains the latest obtained remaining distance and the remaining distance one period earlier than the latest remaining distance (step S12 of Fig. 2). Although not illustrated, it is impossible to obtain the one-period-earlier remaining distance in the first remaining-distance obtainment after having entered the assistance area, and therefore the determining section 33 ends the remaining-distance abnormality determination process.

Thereafter, the determining section 33 obtains the speed of the vehicle 10 in an obtainment interval, which is the time difference between the obtainment time point of the one-period-earlier remaining distance and the obtainment time point of the latest remaining distance (step S13 of Fig. 2). If the speed variation in this obtainment interval is great, the speed at the center of the obtainment interval may be obtained, or the average speed may be calculated from a plurality of speeds in the obtainment interval. Thereafter, the determining section 33 calculates the traveled distance from the vehicle speed (step S14 of Fig. 2). Based on the obtained speed and the obtainment interval, the determining section 33 calculates the traveled distance, which has been covered by the vehicle during one period, which is the obtainment interval. The determining section 33 estimates the remaining distance, which corresponds to the latest remaining distance, from the one-period-earlier remaining distance and the calculated traveled distance (step S15 of Fig. 2). In other words, the determining section 33 obtains a remaining distance estimated by subtracting the calculated traveled distance from the one-period-earlier remaining distance. After obtaining the estimated remaining distance, the determining section 33 makes a comparison between the remaining distance obtained as the latest remaining distance and the estimated remaining distance, and determines whether the remaining distance, which has been obtained as the latest remaining distance, and the estimated remaining distance are different from each other (step S16 of Fig. 2). Although this determination can be made in a comparison manner that uses a value obtained by rounding the remaining distances to a predetermined number of effective digits, an acceptable range based on errors and the like caused by calculation or the like may be fixed so that it can be determined that the remaining distances are equal to each other if the error between the remaining distances is less than the acceptable range. As a result of this determination, if it is determined that the remaining distances are different from each other (YES at step S16 of Fig. 2), the determining section 33 determines that the remaining distance, which has been obtained as the latest remaining distance, is abnormal. In other words, the determining section 33 determines that abnormalities caused by, for example, an overload are occurring in the navigation device 20, which has output this remaining distance (step S17 of Fig. 2). If the navigation device 20 has abnormalities, reliability concerning the remaining distance of the vehicle 10 to the stopping position will be lowered, and therefore reliability concerning the driving assistance may not be maintained. Therefore, the driving assistance based on the remaining distance corresponding to the stopping position of this assistance area provided by the accelerator-release guiding section 35 is ended in response to the determination of the determining section 33 (step S18 of Fig. 2). The remaining-distance abnormality determination process is ended.

On the other hand, if the remaining distance obtained as the latest remaining distance and the estimated remaining distance are not different from each other (NO at step S16 of Fig. 2), the determining section 33 determines that this obtained latest remaining distance has no abnormalities, i.e., is normal. The determining section 33 determines that the navigation device 20, which has output this remaining distance, is normal (step S19 of Fig. 2). The remaining-distance abnormality determination process is ended.

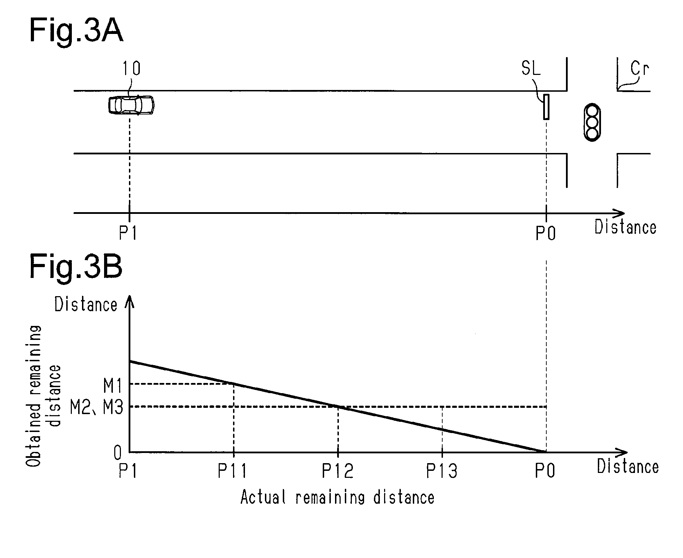

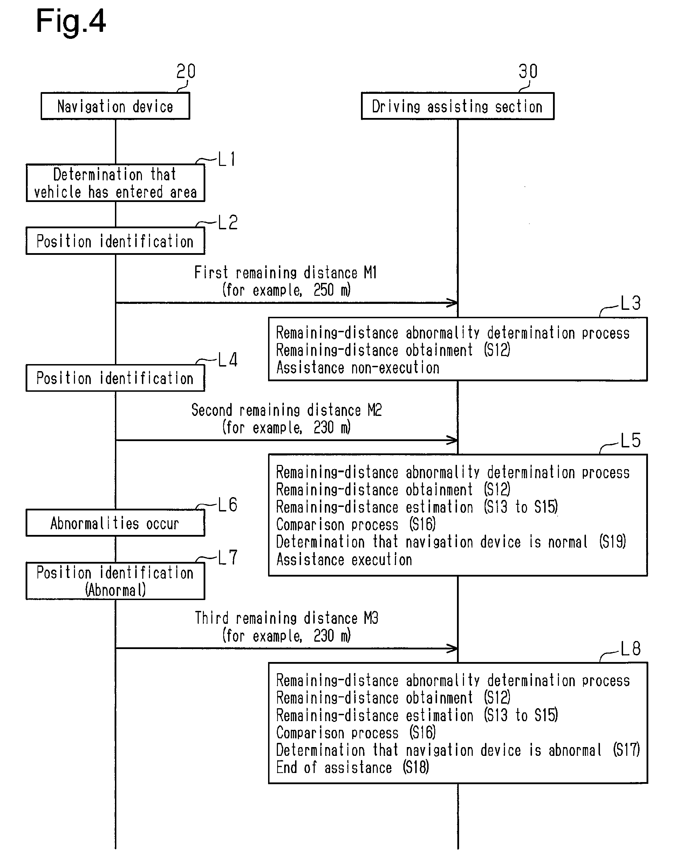

Operation of the vehicle information-processing device will now be described with reference to Figs. 3 and 4.

As shown in Figs. 3A and 3B, assume that the vehicle 10 is traveling toward an intersection Cr having a traffic light. At this time, the traffic light of the intersection Cr is assumed to show a stop signal, and the position of a stop line SL is assumed to be a stopping position P0, and the position at which the vehicle 10 enters an assistance area corresponding to the stopping position P0 is assumed to be an entering position P1. Each position of actual remaining distances P11, P12, and P13 between the entering position P1 and the stopping position P0 corresponds to each period at which a remaining distance is obtained, and each of the remaining distances M1 to M3 output from the navigation device 20 at constant periods is obtained by the driving assisting section 30. Assume that abnormalities occur in the navigation device 20 in the actual remaining distance P12 and that it becomes impossible to properly calculate the remaining distance and that the remaining distance M3 obtained after this occurrence has abnormalities. For example, suppose that M2 is equal to M3 (M2 = M3). In other words, the actual remaining distance P13 and the obtained remaining distance M3 are different in distance from each other although the actual remaining distance P11 and the obtained remaining distance M1 are equal in distance to each other, and the actual remaining distance P12 and the obtained remaining distance M2 are equal in distance to each other. For purposes of illustration, for example, relationships of the speed variation of the vehicle 10 with respect to distance and time are not accurately shown in the drawings.

When the vehicle 10 travels and reaches the assistance area as shown in Fig. 4, the navigation device 20 determines that the vehicle 10 has entered the assistance area (step L1 of Fig. 4), and identifies the position of the vehicle 10 relative to the stopping position P0 (step L2 of Fig. 4). The navigation device 20 identifies the position of the vehicle 10 by means of the remaining distance corresponding to the stopping position P0. At step L2, for example, 250 m is identified as a first remaining distance M1, and this identified remaining distance is output to the driving assisting section 30.

The driving assisting section 30 performs the remaining-distance abnormality determination process in response to the obtainment of the first remaining distance M1 (step L3 of Fig. 4). In the remaining-distance abnormality determination process, the remaining distance M1, which is 250 m, is obtained as the latest obtained remaining distance. The one-period-earlier remaining distance is not obtained, and therefore the remaining-distance abnormality determination process is ended. At this time, it is impossible to determine whether the latest remaining distance M1 is abnormal, and therefore driving assistance to the stopping position P0 is not started, and remains unperformed.

The navigation device 20 identifies the position of the vehicle 10 in the following period (step L4 of Fig. 4). At step L4, for example, 230 m is identified as a second remaining distance M2, and this identified remaining distance is output to the driving assisting section 30.

The driving assisting section 30 performs a remaining-distance abnormality determination process in response to the obtainment of the second remaining distance M2 (step L5 of Fig. 4). In the remaining-distance abnormality determination process, the remaining distance M2, which is 230 m, is obtained as the latest remaining distance, and the remaining distance M1, which is 250 m, is obtained as the one-period-earlier remaining distance. From an obtainment interval (interval of time) between the one-period-earlier remaining distance M1 and the latest remaining distance M2 and the vehicle speed in the interval, the traveled distance in this obtainment interval is calculated. The calculated traveled distance is subtracted from the one-period-earlier remaining distance M1, and the remaining distance, which corresponds to the latest remaining distance M2, is estimated. In other words, if the one-period-earlier remaining distance M1 is 250 m and the calculated traveled distance is 20 m, the estimated remaining distance becomes 230 m. A comparison is made between this estimated remaining distance 230 m and the latest remaining distance M2, which is 230 m. The estimated remaining distance, which is 230 m, and the latest remaining distance M2, which is 230 m, are equal to each other Thus, it is determined that the latest obtained remaining distance is not abnormal. Therefore, the driving assisting section 30 concludes that the navigation device 20 has no abnormalities. The driving assisting section 30 allows driving assistance to be performed based on the latest remaining distance M2.

There is a case in which abnormalities, such as a delay in processing, that are caused by, for example, a temporary overload ,occur in the navigation device 20 as described above (step L6 of Fig. 4). There is also a case in which the time when abnormalities occur coincides with the processing of identifying the position of the vehicle 10 (step L7 of Fig. 4). At this time, even if the position of the vehicle 10 is identified, the reliability of the identified position is low because of the overload or the like. Suppose that abnormalities are included in the position identified at this time. For example, at step L7, 230 m, which is the same value as the second remaining distance M2, is identified as a third remaining distance M3. The remaining distance identified under this abnormal state is output to the driving assisting section 30 from the navigation device 20. There is a case in which, even if abnormalities are occurring in a part of the navigation device 20, an information transmitting portion is working normally, and the part of the navigation device 20 will be recovered afterwards, and the navigation device 20 can normally output the third remaining distance M3 to the driving assisting section 30.

The driving assisting section 30 performs a remaining-distance abnormality determination process in response to the obtainment of the third remaining distance M3 (step L8 of Fig. 4). In the remaining-distance abnormality determination process, the remaining distance M3, which is 230 m, is obtained as the latest remaining distance, and the remaining distance M2, which is 230 m, is obtained as the one-period-earlier remaining distance. From an obtainment interval between the one-period-earlier remaining distance M2 and the latest remaining distance M3 and the vehicle speed in the interval, the remaining distance is estimated. In other words, if the one-period-earlier remaining distance M2 is 230 m and the traveled distance is 20 m, the estimated remaining distance becomes 210 m. A comparison is made between this estimated remaining distance 210 m and latest remaining distance M3, which is 230 m. The estimated remaining distance, which is 210 m, and the latest remaining distance M3, which is 230 m, are different from each other, and therefore it is determined that the latest obtained remaining distance is abnormal. Therefore, the driving assisting section 30 determines that the navigation device 20 has abnormalities. The driving assisting section 30 ends the driving assistance based on the latest remaining distance M3.

As described above, it is possible for the driving assisting section 30 to efficiently determine whether the obtained remaining distance is abnormal by means of this driving assisting section 30, which uses remaining distances.

The vehicle information-processing device according to the present embodiment achieves the following advantages.
(1) Whether an obtained remaining distance is abnormal is determined based on a comparison between the obtained remaining distance and an estimated remaining distance calculated as a destination based on one period of time corresponding to an obtainment interval between remaining distances and on the speed during the period. Therefore, it is possible for the driving assisting section 30 to efficiently determine whether an obtained remaining distance is abnormal. For example, it is possible to determine whether an obtained remaining distance is abnormal based on the difference between an estimated remaining distance and the obtained remaining distance. When it is determined that the obtained remaining distance is abnormal, driving assistance that uses the obtained remaining distance is stopped. As a result, driving assistance that is needless or improper is restrained from being performed.
(2) Whether an obtained remaining distance is abnormal is determined by a comparison between a calculated remaining distance and the obtained remaining distance, i.e., is determined by whether the difference between a calculated remaining distance and the obtained remaining distance is large. It is more preferable to determine whether an obtained remaining distance is abnormal by a comparison between the magnitude of the difference and an acceptable range.
(3) Whether an obtained remaining distance is abnormal is determined based on the remaining distance to a target position. The target position includes a stopping position and a deceleration position. For example, it is possible to suitably perform vehicle stopping assistance by, for example, assistance that guides accelerator-release if the target position is a stopping position.
(4) While remaining distances obtained at constant periods are used easily for driving assistance, abnormalities may occur because of, for example, a delay in processing of the navigation device, which provides the remaining distances. In the present embodiment, a comparison between a calculated remaining distance and an obtained remaining distance makes it possible to determine whether the latest remaining distance is abnormal each time it is obtained at constant periods, and, in accordance with this determination, it is possible to provide driving assistance or to restrain this provision.

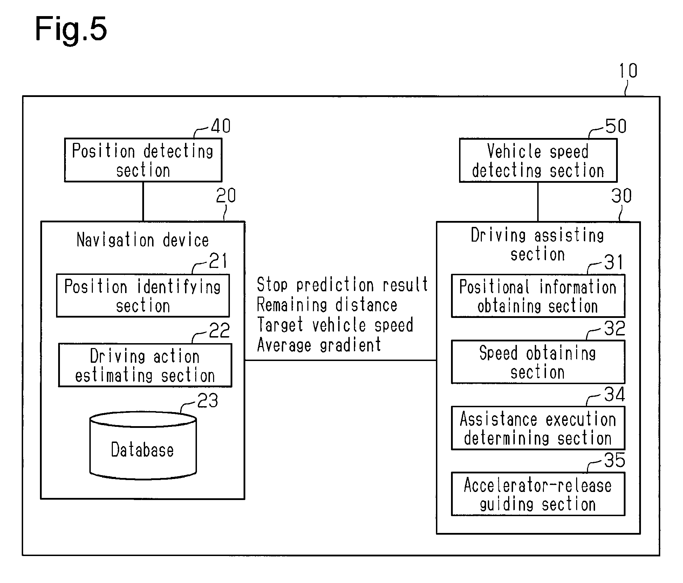

A vehicle information-processing device according to a second embodiment will now be described with reference to Figs. 5 to 7.

The second embodiment is configured differently from the first embodiment in that the second embodiment is further configured to more properly determine conditions for performing driving assistance in addition to determining whether an obtained remaining distance is abnormal. Except for these differences, the second embodiment is the same as the first embodiment. Therefore, differences between the first and second embodiments are hereinafter described. For purposes of illustration, the same reference numerals as in the first embodiment, components similar to the first embodiment, and a detailed description thereof will be omitted.

As shown in Fig. 5, the driving assisting section 30 includes an assistance execution determining section 34, which performs the assistance execution determination process, instead of the determining section 33 mentioned above. The assistance execution determining section 34 includes a configuration to more properly determine execution conditions of driving assistance in addition to determining whether an obtained remaining distance is abnormal. For example, the assistance execution determining section 34 includes a process corresponding to that of the determining section 33 of the first embodiment as a configuration to determine whether an obtained remaining distance is abnormal. The assistance execution determining section 34 more properly determines the execution conditions of driving assistance by using the determination of the presence or absence of an abnormality of a remaining distance that is obtained by a process corresponding to that of the determining section 33.

The assistance execution determining section 34 is capable of reading various parameters necessary for the assistance execution determination process from a storage device in the driving assisting section 30. The assistance execution determining section 34 creates a readable/writable flag area in the storage device in the driving assisting section 30, and uses this flag area to set a non-assistance-restart area. In this flag area, for example, 1 is set when a non-assistance-restart area is set, and, for example, 0 is set when a non-assistance-restart area is not set. In this flag area, set contents are cleared to 0 as necessary in accordance with a predetermined condition. The predetermined condition is set as a predetermined period of time. The predetermined period of time includes at least one of a plurality of periods of time, such as a period of time until the vehicle 10 covers a predetermined distance, a period of time until a predetermined time elapses, a period of time until a target position is changed, and a period of time until a traveling area or a link changes.

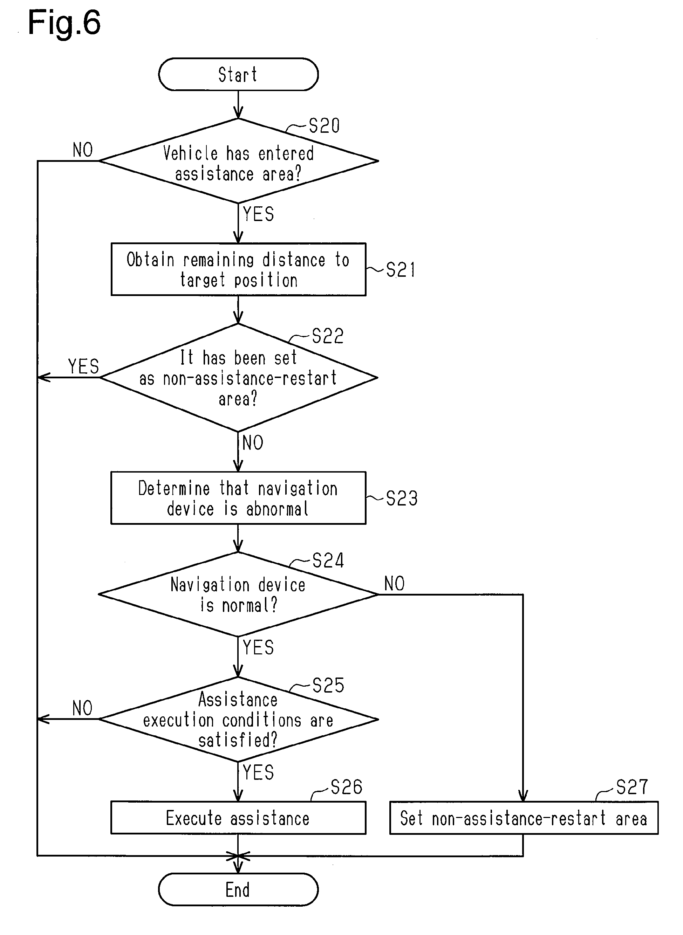

A process performed in the assistance execution determining section 34 will be described in detail with reference to Fig. 6. The assistance execution determining section 34 starts the assistance execution determination process in response to the obtainment of a stop prediction result from the navigation device 20.

When the assistance execution determination process is started, the assistance execution determining section 34 determines whether the vehicle 10 has entered an assistance area corresponding to a stopping position (step S20 of Fig. 6). This process is the same as the process of step S11 of Fig. 2, which is performed by the determining section 33 of the first embodiment. If the assistance execution determining section 34 determines that the vehicle 10 has not entered the assistance area corresponding to the stopping position (NO at step S20 of Fig. 6), the assistance execution determining section 34 ends the assistance execution determination process.

If the assistance execution determining section 34 determines that the vehicle 10 has entered the assistance area corresponding to the stopping position (YES at step S20 of Fig. 6), the assistance execution determining section 34 obtains the latest remaining distance and the one-period-earlier remaining distance (step S21 of Fig. 6). It is impossible to obtain the one-period-earlier remaining distance in the first remaining-distance obtainment after having entered the assistance area (not shown), and therefore the assistance execution determining section 34 ends the assistance execution determination process.

The assistance execution determining section 34 determines whether a non-assistance-restart area has been set (step S22 of Fig. 6). While referring to the flag area that is used to set a non-assistance-restart area, the assistance execution determining section 34 determines that a non-assistance-restart area has been set when 1 is set, and determines that a non-assistance-restart area has not been set when 0 is set. If the assistance execution determining section 34 determines that a non-assistance-restart area has been set (YES at step S22 of Fig. 6), the assistance execution determining section 34 ends the assistance execution determination process. In contrast, if the assistance execution determining section 34 determines that a non-assistance-restart area has not been set (NO at step S22 of Fig. 6), the assistance execution determining section 34 determines that the navigation device 20 is abnormal (step S23 of Fig. 6). It is possible to make the determination that the navigation device 20 is abnormal through the procedure from step S12 to step S19 of Fig. 2 of the first embodiment. When the determination that the navigation device 20 is abnormal ends, the assistance execution determining section 34 determines whether the navigation device 20 is normal (step S24 of Fig. 6). If the assistance execution determining section 34 determines that the navigation device 20 is not normal (NO at step S24 of Fig. 6), the assistance execution determining section 34 sets a non-assistance-restart area. In other words, 1 is set in the flag area. At this time, driving assistance is stopped as shown in, for example, step S18 of Fig. 2 of the first embodiment. The assistance execution determination process is also ended.

If the assistance execution determining section 34 determines that the navigation device is normal (YES at step S24 of Fig. 6), the assistance execution determining section 34 determines whether assistance execution conditions are satisfied (step S25 of Fig. 6). The assistance execution conditions include at least either one of the condition that the vehicle speed is 30 km/h or more and the condition that the latest remaining distance is 10 m or more. If the assistance execution determining section 34 determines that the assistance execution condition is not satisfied (NO at step S25 of Fig. 6), the assistance execution determining section 34 ends the assistance execution determination process. In contrast, if the assistance execution determining section 34 determines that the assistance execution condition is satisfied (YES at step S25 of Fig. 6), the assistance execution determining section 34 issues a command to perform driving assistance. Therefore, the accelerator-release guiding section 35 receives the command to perform driving assistance from the assistance execution determining section 34, and performs the driving assistance. The assistance execution determining section 34 ends the assistance execution determination process.

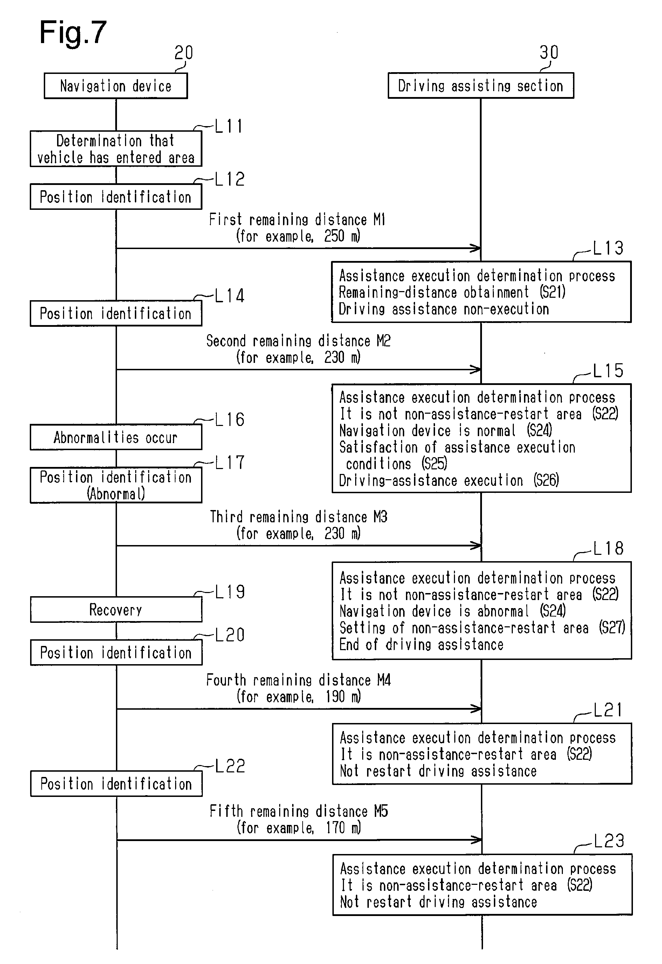

Operation of the vehicle information-processing device will now be described with reference to Fig. 7. Fig. 7 is a sequence diagram corresponding to Fig. 4 described above.

As shown in Fig. 7, when the vehicle 10 travels and reaches an assistance area, the navigation device 20 determines that the vehicle 10 has entered the assistance area (step L11 of Fig. 7), and identifies the position of the vehicle 10 relative to the stopping position P0 (step L12 of Fig. 7). At step L12, for example, 250 m is identified as a first remaining distance M1, and this identified remaining distance is output to the driving assisting section 30.

The driving assisting section 30 performs the assistance execution determination process in response to the obtainment of the first remaining distance M1 (step L13 of Fig. 7). In the assistance execution determination process, the remaining distance M1, which is 250 m, is obtained as the latest remaining distance. The one-period-earlier remaining distance is not obtained, and therefore the assistance execution determination process is ended. At this time, it is impossible to determine whether the latest remaining distance M1 is abnormal, and therefore driving assistance corresponding to the stopping position P0 is not started, and remains unperformed.

Thereafter, the navigation device 20 identifies the position of the vehicle 10 relative to the stopping position P0 in the following period (step L14 of Fig. 7). At step L14, for example, 230 m is identified as a second remaining distance M2, and this identified remaining distance is output to the driving assisting section 30.

The driving assisting section 30 performs the assistance execution determination process in response to the obtainment of the second remaining distance M2 (step L15 of Fig. 7). In the assistance execution determination process, the latest remaining distance M2, which is 230 m, and the one-period-earlier remaining distance M1, which is 250 m, are obtained (step S21 of Fig. 6). Thereafter, the driving assisting section 30 determines that it is not a non-assistance-restart area (NO at step S22 of Fig. 6), that the navigation device 20 is normal (YES at step S24 of Fig. 6), and that the assistance execution condition is satisfied (YES at step S25 of Fig. 6). The driving assisting section 30 allows driving assistance to be performed based on the latest remaining distance M2 (step S26 of Fig. 6).

Thereafter, an abnormality occurs in the navigation device 20 (step L16 of Fig. 7), and a process for identifying the position of the vehicle 10 is performed when the abnormality is occurring (step L17 of Fig. 7). At this time, even if the position of the vehicle 10 is identified, the reliability of this identified position is low because of an overload or the like. Suppose that an abnormality is included in the identified position. For example, at step L17, 230 m, which is the same value as the second remaining distance M2, is identified as a third remaining distance M3. This identified remaining distance is output to the driving assisting section 30 from the navigation device 20.

The driving assisting section 30 performs the assistance execution determination process in response to the obtainment of the third remaining distance M3 (step L18 of Fig. 7). In the assistance execution determination process, the latest remaining distance M3, which is 230 m, and the one-period-earlier remaining distance M2, which is 230 m, are obtained (step S21 of Fig. 6). Thereafter, the driving assisting section 30 determines that it is not a non-assistance-restart area (NO at step S22 of Fig. 6) and that the navigation device 20 is abnormal (NO at step S24 of Fig. 6), and sets a non-assistance-restart area (step S27 of Fig. 6). At this time, the driving assisting section 30 ends the driving assistance when it is determined that the navigation device 20 is abnormal.

Thereafter, the navigation device 20 recovers to be normal (step L19 of Fig. 7), and the position of the vehicle 10 is identified in a normal state (step L20 of Fig. 7). For example, at step L20, 190 m is identified as a fourth remaining distance M4, and this identified remaining distance is output to the driving assisting section 30.

The driving assisting section 30 performs the assistance execution determination process in response to the obtainment of the fourth remaining distance M4 (step L21 of Fig. 7). In the assistance execution determination process, the latest remaining distance M4, which is 190 m, and the one-period-earlier remaining distance M3, which is 230 m, are obtained (step S21 of Fig. 6). Thereafter, in the driving assisting section 30, the remaining distance M3 is abnormal, and therefore the difference between the remaining distance M3 and the remaining distance M4 also includes an abnormality, and therefore a coincidence with an estimate value is not achieved. Therefore, it is determined that it is a non-assistance-restart area (YES at step S22 of Fig. 6), and the driving assistance is not restarted.

Thereafter, the navigation device 20 identifies the position of the vehicle 10 (step L22 of Fig. 7). For example, at step L22, for example, 170 m is identified as a fifth remaining distance M5, and this identified remaining distance is output to the driving assisting section 30.

The driving assisting section 30 performs the assistance execution determination process in response to the obtainment of the fifth remaining distance M5 (step L23 of Fig. 7). In the assistance execution determination process, each latest remaining distance M5, which is 170 m, and the one-period-earlier remaining distance M4, which is 190 m, are obtained (step S21 of Fig. 6). At this time, the fourth remaining distance M4 and the fifth remaining distance M5 are obtained as normal values, respectively. Therefore, there is also a possibility that it will be determined that the remaining distances have no abnormalities, i.e., it will be determined that the navigation device 20 is normal. However, thereafter, the driving assisting section 30 determines that it is a non-assistance-restart area for the reason that, for example, the vehicle speed is low (YES at step S22 of Fig. 6), and the driving assistance is not restarted.

Therefore, if the driving assistance at the specific stopping position P0 is once ended due to an abnormality of the navigation device 20, the driving assistance at this stopping position P0 is not immediately restarted even if the function of the navigation device 20 recovers afterward. Therefore, after the driving assistance at the stopping position P0 is once ended, the restart after further approaching the stopping position P0 is restrained, and the possibility of giving an uncomfortable sensation to the driver is restrained. In other words, when the navigation device 20 repeatedly reaches an abnormal state and a recovery state because of an overload or the like, the execution and the end of the driving assistance are restrained from being repeatedly performed in the assistance execution determination process in response to those abnormal and recovery states.

In addition to the advantages (1) to (4) of the first embodiment, the vehicle information-processing device of the present embodiment achieves the following advantage.
(5) Even if a determination about whether an obtained remaining distance is abnormal is changed in a short time, the provision of driving assistance information is restrained from being repeatedly restarted or stopped needlessly in response to the change.

The predetermined period of time includes a period of time until the vehicle covers a predetermined distance, a period of time until a predetermined time elapses, a period of time until a target position is changed, and a period of time until a traveling area or a link changes.

The above described embodiments may be modified as follows.

The vehicle 10 is an automobile in each embodiment mentioned above, and the automobile may be a gasoline automobile, which uses an internal combustion engine as a driving source, an electric automobile, which uses an electric motor as a driving source, or a hybrid automobile, which uses both an internal combustion engine and an electric motor.

In each of the above embodiments, consumption of fuel is restrained by accelerator-release guidance. However, the present invention is not limited to this, and, if the vehicle is an automobile, such as an electric automobile or a hybrid automobile, that is capable of regenerating electric power, the use of a mechanically-operated brake may be restrained by accelerator-release guidance so that the automobile can be decelerated many times by the regenerative operation (regenerative braking) of the motor. Kinetic energy is recovered as electrical energy by the increase of the regenerative operation, and energy efficiency is improved, i.e., fuel cost or electricity cost is improved.

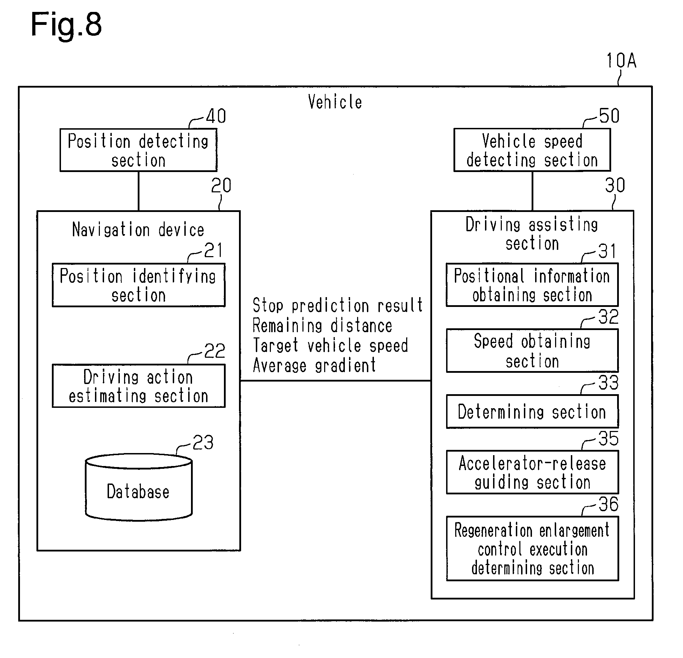

For example, as shown in Fig. 8, a vehicle 10A, which is an electric automobile or a hybrid automobile, may include a regeneration enlargement control execution determining section 36. The regeneration enlargement control execution determining section 36 may be configured to be capable of controlling the ratio between the mechanically-operated brake and the regenerative braking in a brake operation in consideration of the regenerative operation of a motor or may be configured to be capable of allowing the accelerator-release guiding section 35 to calculate an accelerator-release time more properly.

In each of the above embodiments, the driving assistance information is accelerator-release guidance, and yet the present invention is not limited to this, and the contents of driving assistance may be brake-application guidance or course-change guidance.

In the above second embodiment, the predetermined period of time includes at least one of a plurality of periods of time, such as a period of time until the vehicle 10 covers a predetermined distance, a period of time until a predetermined time elapses, a period of time until a target position is changed, and a period of time until a traveling area or a link changes. In other words, if the predetermined period of time is a period of time that does not give an uncomfortable sensation to the users of the vehicle, it may be only necessary to establish any one of two or more combinations among the aforementioned periods of time. Other conditions may be added to the aforementioned periods of time. Therefore, it is possible to set the predetermined period of time more suitably.

In each of the above embodiments, driving assistance remains unperformed when it is impossible to determine whether the remaining distance M1 obtained first after having entered the assistance area is abnormal. However, without being limited to this, driving assistance may be temporarily performed without determining whether the remaining distance obtained first after having entered the assistance area is abnormal. In this case, it is only necessary to end the driving assistance afterward, based on the determination that the remaining distance is abnormal.

In each of the above embodiments, the latest obtained remaining distance is compared with a remaining distance estimated on the basis of the one-period-earlier remaining distance. However, without being limited to this, the latest obtained remaining distance may be compared with a remaining distance estimated on the basis of a remaining distance that is two or more periods earlier. It is also possible to make such a comparison if an obtainment interval between the latest obtained remaining distance and the two-or-more-periods-earlier remaining distance and the vehicle speed are obtained. Therefore, it is possible to increase the flexibility of design of the vehicle information-processing device.

In each of the above embodiments, the remaining distance of the vehicle 10 is obtained at constant periods. However, without being limited to this, the remaining distance of the vehicle may be capable of being obtained periodically or when necessary. Even if the obtainment interval changes each time the remaining distance is obtained, it is possible to calculate a traveled distance based on the obtainment interval (interval of time) and the speed if the obtainment interval is identified, and it is possible to compare pieces of vehicle positional information with each other before and after the obtainment interval.

In each of the above embodiments, a comparison is made between the remaining distance obtained as the latest remaining distance and the estimated remaining distance, and it is determined whether these distances are equal to each other. However, without being limited to this, it may be determined whether the latest obtained remaining distance and the estimated remaining distance are equal to each other by comparing the magnitude of the difference between the latest remaining distance and the estimated remaining distance with a determination value. For example, if the difference between the latest remaining distance and the estimated remaining distance is less than the determination value, it may be determined that the latest remaining distance and the estimated remaining distance are equal to each other. In contrast, if the difference between the latest remaining distance and the estimated remaining distance is greater than or equal to the determination value, it may be determined that the latest obtained remaining distance and the estimated remaining distance are different from each other. The determination value is set to include an error that might be caused during the obtainment interval. This error is set in consideration of, for example, a delay in communication between the navigation device and the driving assisting section, a gap in calculation starting time, or a delay in arithmetic processing when the load is great.

In each of the above embodiments, based on the estimated remaining distance and the remaining distance obtained as the latest remaining distance, the determining section 33 and the assistance execution determining section 34 determine whether the value of this remaining distance obtained as the latest remaining distance is abnormal. Additionally, the accelerator-release guiding section 35 starts driving assistance in response to the determination by means of the determining section 33 and the like that the remaining distance has no abnormalities, and ends the driving assistance in response to the determination by means of the determining section 33 and the like that the remaining distance has abnormalities. However, without being limited to this, the determining section serving as a provision determining section may merely calculate whether the difference between the estimated remaining distance and the remaining distance obtained as the latest remaining distance is equal to or more than a determination set value without determining whether it is abnormal. The determining section may allow the accelerator-release guiding section to start driving assistance when the difference is less than the determination value, and may allow the accelerator-release guiding section to end the driving assistance when the difference becomes more than the determination value during the driving assistance. Therefore, it is possible to restrain the provision of driving assistance information in accordance with whether the value of the remaining distance obtained as the latest remaining distance is abnormal.

The thus configured determining section may continuously restrain the provision of driving assistance information only for a predetermined time after restraining the provision of driving assistance information. Therefore, even if the difference between the estimated remaining distance and the remaining distance obtained as the latest remaining distance changes in a short time, the provision of driving assistance information is restrained from being repeatedly restarted or stopped needlessly in response to the change.

In each of the above embodiments, the remaining distance, which is a relative distance from the stopping position P0 to the vehicle, is set as positional information. However, without being limited to this, longitude/latitude or arbitrary coordinates on a map may be set as positional information if a vehicle positional relationship at the opposite ends of an obtainment interval (interval of time) can be shown in a relative manner. According to the longitude/latitude, it is possible to, based on the traveled distance calculated from the obtainment interval and the speed, make a comparison between the position calculated from the position of one end of the obtainment interval and the position obtained from the other end of the obtainment interval. It is only necessary to include a positional information obtaining section, which obtains positional information that identifies the position of the vehicle, and a speed obtaining section, which obtains the speed of the vehicle. Additionally, it is only necessary to include a determining section, which determines whether positional information obtained from the positional information obtaining section is abnormal based on a comparison between positional information calculated based on a speed obtained by the speed obtaining section and a period of time corresponding to an obtainment interval of positional information by means of the positional information obtaining section and positional information obtained from the positional information obtaining section.

In each of the above embodiments, driving assistance information is output as images or as voice through the HMI. However, without being limited to this, driving assistance information may be output to an automatic braking device or to a vehicle control device, and these automatic braking device and vehicle control device may be part of a device that allows the vehicle to be automatically operated. For example, if accelerator-release guidance is provided as driving assistance information to the automatic braking device of the vehicle, it is possible for the vehicle to restrain energy loss caused by the use of the mechanically-operated brake in automatic braking controlling. The determining section (33) defines as, calculation positional information, positional information calculated based on a speed of a vehicle (10, 10A) obtained by a speed obtaining section (32) and a period of time corresponding to an obtainment interval of positional information. The determining section (33) determines whether the positional information of the vehicle (10, 10A) obtained from a positional information obtaining section (31) is abnormal based on a comparison between the calculation positional information and the positional information.

## Claims

1. A vehicle information-processing device configured to provide driving assistance information to a vehicle (10, 10A), the vehicle information-processing device comprising:
a positional information obtaining section (31) configured to obtain positional information of the vehicle (10, 10A);
a speed obtaining section (32) configured to obtain a speed of the vehicle (10, 10A); and
a determining section (33) configured to determine whether positional information obtained from the positional information obtaining section (31) is abnormal,
wherein the determining section (33) is configured to
define, as calculation positional information, positional information calculated based on the speed obtained by the speed obtaining section (32) and a period of time corresponding to an obtainment interval of positional information by the positional information obtaining section (31), and
determine whether the positional information obtained from the positional information obtaining section (31) is abnormal based on a comparison between the calculation positional information and the positional information obtained from the positional information obtaining section (31).

2. The vehicle information-processing device according to claim 1, wherein the determining section (33) is configured to
determine that the positional information obtained from the positional information obtaining section (31) has no abnormality if a difference between a position identified by the calculation positional information and a position identified by the positional information obtained from the positional information obtaining section (31) is less than a preset determination value, and
determine that the positional information obtained from the positional information obtaining section (31) has an abnormality if the difference is greater than or equal to the preset determination value.

3. The vehicle information-processing device according to claim 1 or 2, wherein the vehicle information-processing device is configured to restrain provision of driving assistance information based on the positional information obtained from the positional information obtaining section (31) for a predetermined period of time after the determining section (33) determines that the positional information obtained from the positional information obtaining section (31) has an abnormality.

4. The vehicle information-processing device according to any one of claims 1 to 3, wherein
the positional information obtaining section (31) is configured to obtain the positional information as a relative distance with respect to a target position (P0) that exists in a course of the vehicle (10, 10A),
a relative distance from a front end of the obtainment interval to the target position (P0) is defined as a first relative distance (M1),
a relative distance from a rear end of the obtainment interval to the target position (P0) is defined as a second relative distance (M2),
a residual distance obtained by subtracting a distance calculated based on the speed and a period of time corresponding to the obtainment interval from the first relative distance (M1) is defined as a remaining distance, and
the determining section (33) is configured to compare the remaining distance with the second relative distance (M2).

5. The vehicle information-processing device according to any one of claims 1 to 4, wherein the positional information obtaining section (31) is configured to obtain positional information of the vehicle (10, 10A) at constant periods.

6. A vehicle information-processing device configured to provide driving assistance information to a vehicle (10, 10A), the vehicle information-processing device comprising:
a positional information obtaining section (31) configured to obtain positional information of the vehicle (10, 10A); and
a speed obtaining section (32) configured to obtain a speed of the vehicle (10, 10A),
wherein the vehicle information-processing device is configured to
define, as calculation positional information, positional information calculated based on the speed obtained by the speed obtaining section (32) and a period of time corresponding to an obtainment interval of positional information by the positional information obtaining section (31), and
restrain provision of driving assistance information based on the positional information obtained from the positional information obtaining section (31) if a difference between a position identified by the calculation positional information and a position identified by the positional information obtained from the positional information obtaining section (31) is greater than or equal to a preset determination value.

7. The vehicle information-processing device according to claim 6, wherein the vehicle information-processing device is configured to continuously restrain provision of the driving assistance information based on the positional information obtained from the positional information obtaining section (31) only for a predetermined time after starting to restrain the provision of the driving assistance information.

8. The vehicle information-processing device according to claim 6 or 7, wherein
the positional information obtaining section (31) is configured to obtain the positional information as a relative distance with respect to a target position (P0) that exists in a course of the vehicle (10, 10A), and
the positional information obtaining section (31) is configured to
define a relative distance from a front end of the obtainment interval to the target position (P0) as a first relative distance (M1),
define a relative distance from a rear end of the obtainment interval to the target position (P0) as a second relative distance (M2),
define, as a remaining distance, a residual distance obtained by subtracting a distance calculated based on the speed and a period of time corresponding to the obtainment interval from the first relative distance (M1), and
restrain provision of driving assistance information based on the positional information obtained from the positional information obtaining section (31) if a difference between the remaining distance and the second relative distance (M2) is greater than or equal to a preset determination value.

9. The vehicle information-processing device according to any one of claims 6 to 8, wherein the positional information obtaining section (31) is configured to obtain the positional information of the vehicle (10, 10A) at constant periods.
